# EUROPEAN PATENT APPLICATION

(11) **EP 2 701 448 A1**
(43) Date of publication of application: **26.02.2014**
(21) Application number: 12773537.1
(22) Date of filing: 11.04.2012
(51) Int. Cl.: H04W 76/02

(54) **MOBILE TERMINAL AND MULTI-ACCESS POINT MANAGEMENT METHOD THEREOF**

(30) Priority: 21.04.2011 CN 201110101141
(71) Applicant: Huizhou TCL Mobile Communication Co., Ltd., Huizhou, Guangdong 516006 (CN)
(72) Inventor: YU, Zhongwen, Huizhou Guangdong 516006 (CN)
(74) Representative: Isarpatent
(86) International application number: PCT/CN2012/073767
(87) International publication number: WO 2012/142920

(57) **Abstract**

A mobile terminal and a multiple access point name (APN) managing method is disclosed in the present invention, and the method includes: receiving a connection request from an expansion type application program; acquiring an APN type information corresponding to the expansion type application program from a predetermined APN expansion table; activating a Packet Data Protocol (PDP) in accordance with the APN type information corresponding to the expansion type application program; establishing a connection of the expansion type application program for executing the expansion type application program. The present invention implements the expansion type application program to predetermine the APN type information and writes in the APN expansion table, so the mobile terminal can support multiple APNs to satisfy the requirement from different carriers and different application program.

## Description

### FIELD OF THE INVENTION

The present invention relates to a field of mobile communications, and more particularly relates to a mobile terminal and multiple access point names (APNs) managing method thereof.

### BACKGROUND OF THE INVENTION

In a mobile terminal, a conventional data connection is established by an Access Point Name (APN). For example, when a Multimedia Messaging Service (MMS) application program is required to send an MMS message, the MMS application program activates a Packet Data Protocol (PDP) through an MMS type of APN, and after the PDP is activated, the MMS application program can send the MMS. Clearly, the connection between the application program and data is distinguished and associated in accordance with the type of APN.

However, it is necessary to setup different APNs to satisfy the requirement for an expansion type of application program. Therefore, the protocol mentioned above is not adequate to satisfy a development for a multiple APN requirement. Hence, in the present technology, the mobile terminal cannot support a managing function with multiple APNs data connection.

### SUMMARY OF THE INVENTION

A main object of the present invention is to solve the problem that a mobile terminal cannot support a data connection managing function with multiple access point names (APNs), and the present invention provides a mobile terminal and a multiple access point name (APN) managing method thereof.

To achieve the above-mentioned resolution, the present invention proposes a technical solution which is: providing a multiple access point managing method of a mobile terminal. The method includes: receiving a connection request from an expansion type application program; acquiring an APN type information corresponding to the expansion type application program from a predetermined APN expansion table; activating a Packet Data Protocol (PDP) in accordance with the APN type information corresponding to the expansion type application program; establishing a connection of the expansion type application program for executing the expansion type application program.

Wherein, before the step of receiving the connection request from the expansion type application program further comprises: converting an expansion APN information to be a configuration file and the APN expansion table in accordance with a definition of the application program.

Wherein, the step of converting the expansion APN information to be the configuration file and the APN expansion table in accordance with the definition of the application program includes: a step of converting by a customizing tool to obtain the configuration file and the APN expansion table.

To achieve the above-mentioned resolution, the present invention proposes another technical solution which is: providing a multiple APN managing method of a mobile terminal, the method comprises: step a, setting an APN expansion table, wherein the APN expansion table comprises an expansion type APN type information; step b, requesting by an application program to establish a connection of the application program when a user requires executing the application program; step c, acquiring an APN type information of the application program from the APN expansion table when the application program is an expansion type application program; step d, activating a Packet Data Protocol (PDP) in accordance with the APN type information of the application program; step e, starting to use and establishing a connection of the application to execute the application program.

Wherein, the step a further comprises a customizing function step, and in the customizing function step, the expansion APN information and a definition of the expansion APN information given by the application program are converted into a configuration file and the APN expansion table of the application program.

Wherein, the configuration file includes an expansion type APN type and a practical definition of the expansion type application program.

Wherein, the expansion type application program includes a streaming media application program and a mail application program.

For achieving the above-mentioned resolution, the present invention proposes another technical solution which is: providing a mobile terminal and includes a connection monitoring module, a connection managing module and an APN managing module, and the connection monitoring module receives and transmits a data connection control command to the connection managing module, an APN type information is read from the connection managing module and the APN managing module, wherein the APN managing module includes an APN expansion table and the APN expansion table includes an expansion type APN type information; when a user requests to execute an application program, the application program request to establish a connection of the application program when the application program is an expansion type application program, the APN type information of the application program is acquired from the APN expansion table by the APN managing module and returned to the APN managing module, the connection managing module activates a Packet Data Protocol in accordance with the APN type information of the application program, the connection of the application program is started to use and established and the application program is executed.

Wherein, the connection monitoring module is configured to monitor an expansion type data connection status.

Wherein, the mobile terminal further includes a customizing tool configured to convert a definition of the expansion APN information by the expansion APN information and the application program to be a configuration file and the APN expansion table of the application program.

The above-mentioned description of the present invention can be best understood by referring to the following detailed description of the preferred embodiments and the accompanying drawings.

### DESCRIPTION OF THE DRAWINGS

FIG. 1 is a functional block diagram illustrating a mobile terminal in the present invention;
FIG. 2 is a flow chart illustrating a customizing tool of the mobile terminal in the present invention;
FIG. 3 is a flow chart illustrating a multiple access point name managing method of the mobile terminal in the present invention; and
FIG. 4 is a specific working flow chart illustrating the multiple access point name managing method of the mobile terminal in the present invention.

### DETAILED DESCRIPTION OF THE PREFERRED EMBODIMENTS

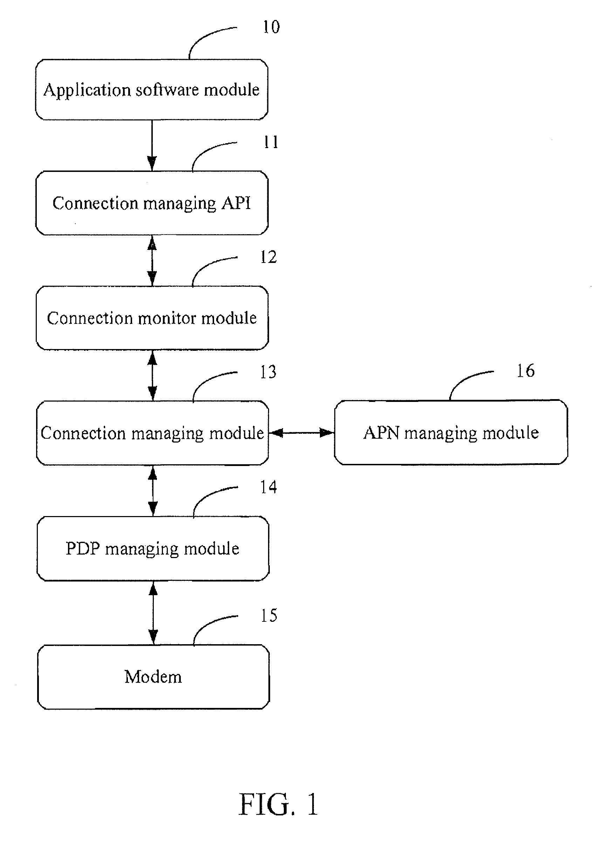

Please refer to FIG. 1, which illustrates a functional block diagram of a mobile terminal in the present invention.

The mobile terminal includes an application program module 10, a connection managing Application Programming Interface (API) 11, a connection monitoring module 12, a connection managing module 13, a Packet Data Protocol (PDP) managing module 14, a Modem 15 and an Access Point Name (APN) managing module 16.

The application program module 10 is an expansion type application program group, wherein it comprises application programs for a browser, an MMS, an Assisted Global Positioning System (AGPS), a streaming media, a mail, and so on.

The connection managing API 11 provides an interface for connection management, and the application program module 10 implements the connection managing API 11 for data connection. The connection monitoring module 12 monitors a connection status of the connection managing API 11. The connection monitoring module 12 includes a default type data connection status monitoring, an MMS type data connection status monitoring, a Dial-Up Network (DUN) type data connection status monitoring, a Secure User Plane Location (SUPL) type data connection status monitoring, a High Performance Parallel Interface (HIPPI) type data connection status monitoring, an expansion type data connection status monitoring functions, and so on.

The connection monitoring module 12 receives a data connection controlling command from the connection managing API 11 and transmits the same to the connection managing module 13. The connection monitoring module 12 is further used to monitor the expansion type data connection status. The connection managing module 13 includes an APN information database, and the APN information database includes an APN name, an APN identification, a proxy, a port, a UserName, a password, a server, an MMS profile, a Mobile Country Code (MCC), a Mobile Network Code (MNC), an AuthType, an APN type and an ExtAPNType. The ExtAPNType is defined by the carriers themselves. In the present invention, the APN information database is an APN expansion table, and the expansion table includes the expansion type APN information.

The connection managing module 13 receives a connection establishing and terminating command from the connection monitoring module 12 and transmits the connection operation command to the PDP managing module 14. The PDP managing module 14 receives the connection operation command from the connection managing module 13 and requests the Modem 15 to activate PDP so as to acquire a PDP activation command. The connection managing module 13 reads an APN type information from the APN managing module 16.

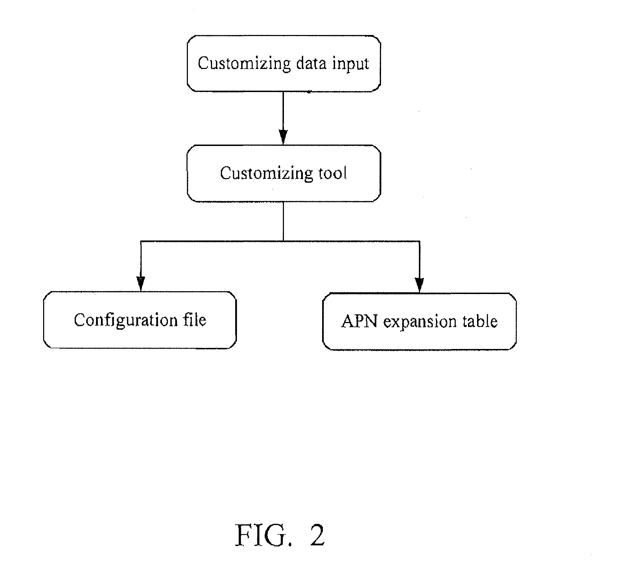

Please refer to FIG. 2, which illustrates a flow chart of a customizing tool of the mobile terminal in the present invention.

The carriers define the expansion type of APN of the mobile terminal in accordance with their application program by the customizing tool, and the customizing tool accomplishes the customizing function steps in the present invention. Firstly, a customizing data is inputted, and the content of the inputted data includes an expansion APN information and a definition of the expansion APN information type given by the application program. Thereafter, the customizing tool processes the data and outputs a configuration file and the APN expansion table. In other words, the customizing tool sorts and assigns the expansion APN information to the configuration files corresponding to the respective application programs in accordance with the definitions of the application programs and the specific definition is processed in the corresponding APN expansion table. The configuration file includes the expansion APN supported and used by the corresponding application program. The configuration file and the APN expansion table processed as described above are downloaded to the mobile terminal for a user to use. The customizing function steps can be accomplished by utilizing the customizing tool.

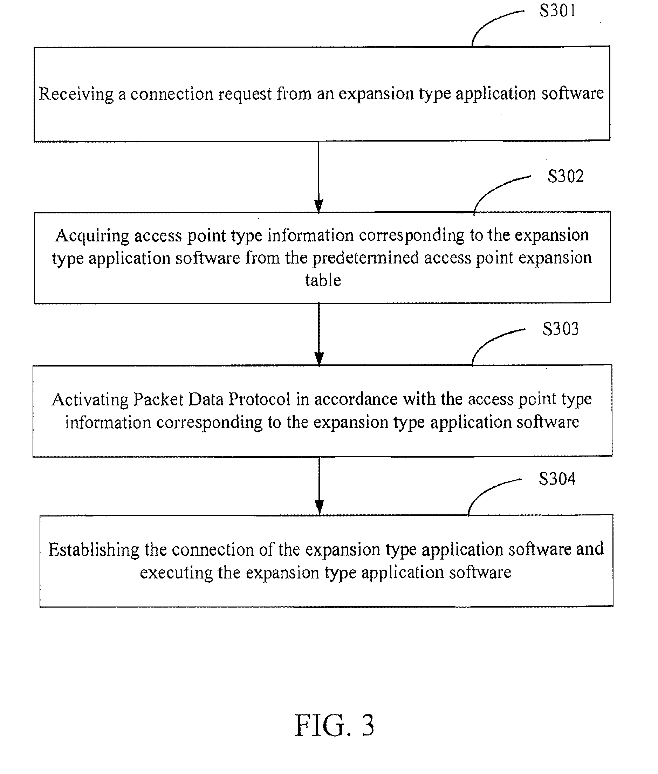

Please refer to FIG. 3, which illustrates a flow chart of a multiple APN managing method of the mobile terminal in the present invention.

In the present embodiment, the APN managing method of the mobile terminal comprises steps of:
Step S301, receive a connection request from the expansion type application program.
Step S302, acquire an APN type information corresponding to the expansion type application program from a predetermined APN expansion table.
Step S303, activate Packet Data Protocol in accordance with the APN information corresponding to the expansion type application program.
Step S304, establish the connection of the expansion type application program so as to execute the expansion type application program.

Wherein, before the Step S301, the method further includes a step that the expansion APN information is converted into the configuration file and the expansion table in accordance with the definition of the application program. Moreover, the conversion can be done by the customizing tool as shown in FIG. 2 to obtain the expansion table and the configuration file.

In addition, the multiple APN managing method of the mobile terminal in the present embodiment is described in the operating procedures of the mobile terminal in FIG. 1 and the detail description thereof is omitted herein.

The present invention predetermines the APN type information and writes into the APN expansion table for the expansion type application program, so the mobile terminal can support multiple APNs to satisfy the requirements for different carriers and different application programs.

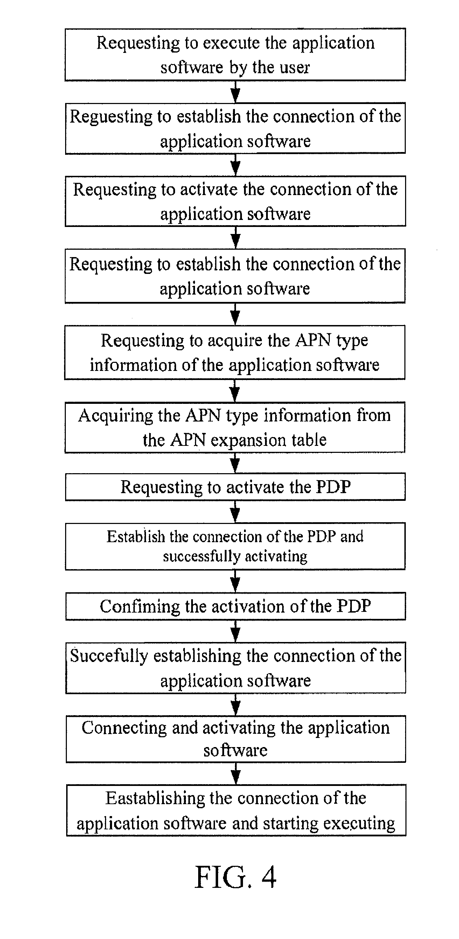

Please refer to FIG. 3 and FIG. 4 in conjunction, FIG. 4 is a specific working flow chart illustrating the multiple APN managing method of the mobile terminal in the present invention. The operating principle procedures of the multiple APN managing method of the mobile terminal in the present invention are described in the following.

As previously described, the carrier uses the customizing tool to accomplish the customizing function steps. The APN expansion table is set in the APN managing module 16, and the APN expansion table includes the expansion type APN information. For example, the browser application program is converted into a browser_configuration_file.xml and ExtAPNTypeBrowser, the streaming media application program is converted into a streaming_media_configuration_file.xml and ExtAPNTypeStream and the mail application program is converted into a mail_configuration_file.xml and ExtAPNTypeMail.

When the user requires executing the application program, the application program is requested to establish a connection of the application program. Specifically, the user requires executing the application program, the application program requests the connection managing API 11 to establish the connection of the application program, the connection managing API 11 requests the connection monitoring module 12 to activate the connection of the application program and the connection monitoring module 12 requests the connection managing module 13 to establish the connection of the application program.

When the application program is the expansion type application program, the APN managing module 16 acquires the APN type information of the application information from the APN expansion table and returns the same to the connection managing module 13. Specifically, the connection managing module 13 requests the APN managing module 16 to acquire the APN type information of the application program, and the APN managing module 16 acquires the APN type information of the application program from the APN expansion table. In addition, the APN managing module 16 determines the type of the application program and the type of the APN and acquires the corresponding APN type information from the APN expansion table.

The connection managing module 13 activates PDP in accordance with the APN type information of the application program. Specifically, procedures such as the connection managing module 13 requests the PDP managing module 14 to activate the PDP, the PDP managing module 14 and the Modem 15 activate the PDP, a connection of PDP is established and PDP is successfully activated, and the PDP managing module 14 confirms the activation of the PDP to the connection managing module 13 are included.

The connection of the application program is started to be used and established, and the application program is executed. Specifically, procedures such as the connection managing module 13 confirms that the connection of the application program is successfully established to the connection monitoring module 12, the connection monitoring module 12 confirms that the connection of the application program has been started to the connection managing API 11, the connection managing API 11 confirms that the connection of the application program has been established to the application program, and the mobile terminal executes the application program are included.

The present invention implements the predetermination of the APN type information and writes in the APN expansion table for the expansion type application program, so the mobile terminal can support multiple APNs so as to satisfy the requirements for different carriers and different application programs.

As described above, the present invention has been described with preferred embodiments thereof and it is understood that many changes and modifications to the described embodiments can be carried out without departing from the scope and the spirit of the invention that is intended to be limited only by the appended claims.

## Claims

1. A multiple access point name (APN) managing method of a mobile terminal, **characterized in that**, comprises:
receiving a connection request from an expansion type application program;
acquiring an APN type information corresponding to the expansion type application program from a predetermined APN expansion table;
activating a Packet Data Protocol (PDP) in accordance with the APN type information corresponding to the expansion type application program;
establishing a connection of the expansion type application program for executing the expansion type application program.

2. The method according to claim 1, **characterized in that**, before the step of receiving the connection request from the expansion type application program, further comprises a step of:
converting an expansion APN information to be a configuration file and the APN expansion table in accordance with a definition of the application program.

3. The method according to claim 2, **characterized in that**, the step of converting the expansion APN information to be the configuration file and the APN expansion table in accordance with the definition of the application program further comprises a step of:
converting by the customizing tool to obtain the configuration file and the APN expansion table.

4. A multiple access point name (APN) managing method of a mobile terminal, **characterized in that**, comprises:
step a, setting an APN expansion table, wherein the APN expansion table comprises an expansion type APN type information;
step b, requesting by an application program to establish a connection of the application program when a user requires executing the application program;
step c, acquiring an APN type information of the application program from the APN expansion table when the application program is an expansion type application program;
step d, activating a Packet Data Protocol (PDP) in accordance with the APN type information of the application program;
step e, starting to use and establishing a connection of the application to execute the application program.

5. The method according to claim 4, **characterized in that**, the step a further comprises a customizing function step, in the customizing function step, the expansion APN information and a definition of such a type of expansion APN information given by the application program are converted into a configuration file and the APN expansion table of the application program.

6. The method according to claim 5, **characterized in that**, the configuration file comprises an expansion type APN type and the APN expansion table comprises a practical definition of the expansion type application program.

7. The method according to claim 5, **characterized in that**, the expansion type application program comprises a streaming media application program and a mail application program.

8. A mobile terminal comprising a connection monitoring module, a connection managing module, and an APN managing module, the connection monitoring module receiving a data connection control command and transmitting the same to the connection managing module, the connection managing module reading an APN type information from the APN managing module, **characterized in that**, the APN managing module includes an APN expansion table and the APN expansion table includes an expansion type APN type information;
when a user requires to execute an application program, the application program requests to establish a connection of the application program, and when the application program is an expansion type application program, the APN type information of the application program is acquired from the APN expansion table by the APN managing module and returned to the connection managing module, the connection managing module activates a Packet Data Protocol (PDP) in accordance with the APN type information of the application program, the connection of the application program is started and established and the application program is executed.

9. The mobile terminal of claim 8, **characterized in that**, the connection monitoring module is configured to monitor an expansion type data connection status.

10. The mobile terminal of claim 8, **characterized in that**, the mobile terminal further comprises a customizing tool which is configured to convert the expansion APN information and a definition of such a type of expansion APN information given by the application program into a configuration file and the APN expansion table of the application program.
